# EUROPÄISCHE PATENTANMELDUNG

(11) **EP 0 955 620 A2**
(43) Veröffentlichungstag der Anmeldung: **10.11.1999**
(21) Anmeldenummer: 99108846.9
(22) Anmeldetag: 04.05.1999
(51) Int. Cl.: G09B 25/04, G09B 9/00

(54) **Gebäudemodell**

(30) Priorität: 08.05.1998 DE 29808347 U
(71) Anmelder: Schmid, Bernd, 60314 Frankfurt am Main (DE)
(72) Erfinder: Die Erfindernennung liegt noch nicht vor
(74) Vertreter: Jochem, Bernd, Dipl.-Wirtsch.-Ing.

(57) **Zusammenfassung**

Ein Gebäudemodell im Miniaturmaßstab dient zur Simulation der Rauchausbreitung bei Bränden in Gebäuden. Bisher sind lediglich Trainingseinrichtungen in Realgröße und Modelle ohne brandspezifische Funktionen bekannt. Für kostengünstige und anschauliche Schulungen wird vorgeschlagen, daß das Gebäudemodell mehrere über schließbare Türen (26) mit einer Zentralkammer (14) verbundene Kammern (12, 14) verfügt. Die Zentralkammer (14) besitzt eine Zugangsöffnung (42) von außen. Wenigstens ein Dampf-Nebelerzeuger (34) und wenigstens ein variabel positionsierbarer Miniaturlüfter (40) zur Erzeugung von Druckdifferenzen und/oder Luftströmungen in dem Gebäudemodell (10) sind vorhanden. Eine transparente Platte erlaubt den Einblick in das Gebäusemodell und die bei der Simulation stattfindende Rauchausbreitung.

## Beschreibung

Die Erfindung befaßt sich mit einem Gebäudemodell zur Simulation der Rauchausbreitung bei Bränden in Gebäuden.

Kommt es in der Praxis zu einem Ausbruch eines Brandes in einem Gebäude mit vielen über Flure oder Treppenhäuser in Verbindung stehenden Räumen, geht eine sehr große Gefährdung nicht nur von dem Feuer selbst, sondern auch von dem sich rasch in dem Gebäude verteilenden Rauch aus. Die Rauchausbreitung hängt dabei zum einen von der Struktur des Gebäudes, aber auch von sonstigen Einflüssen, wie z. B. offenstehenden Türen und Fenstern oder dem Einfluß von Belüftungsanlagen, ab.

Um einen möglichst optimalen Brandschutz zu erlangen, ist es daher bereits in der Planungsphase von Gebäuden erforderlich, geeignete Gegenmaßnahmen zum Eindämmen der Rauchausbreitung zu treffen. Untersuchungen an bestehenden Gebäuden sind äußerst zeit- und kostenaufwendig, so daß die bei der Planung von Gebäuden verwerteten Erfahrungen meist aus tatsächlichen Brandkatastrophen resultieren.

Auch bei einem Feuerwehreinsatz ist es im Falle eines Brandes von äußerster Wichtigkeit, Kenntnis über die Rauchausbreitung zu haben, insbesondere auch unter dem Einfluß getroffener Maßnahmen, wie z. B. dem Einschlagen von Fenstern oder dem Be- bzw. Entlüften von Gebäudebereichen. Auch hier richtet sich die Vorgehensweise der Feuerwehr nach den bei vorherigen Bränden gesammelten Erfahrungen, da realistische Übungen beispielsweise in Hochhäusern kaum durchführbar sind.

Bisher sind aus der US-5,226,818 und der US-5,203,707 lediglich Trainingseinrichtungen in realer Raumgröße bekannt. Die immensen Kosten solcher Anlagen lassen sie jedoch für Schulungszwecke in breitem Rahmen ungeeignet erscheinen. Das aus der CH 402 473 bekannte Gebäudemodell dient nur zur Veranschaulichung und hat keinerlei brandspezifische Funktionen.

Die Aufgabe der Erfindung besteht darin, ein Gebäudemodell zu schaffen, mit Hilfe dessen die Rauchausbreitung bei Bränden in Gebäuden simuliert werden kann.

Erfindungsgemäß wird die Aufgabe dadurch gelöst, daß das Gebäudemodell mehrere Kammern, die wenigstens zum Teil über schließbare Türen mit einer Zentralkammer in Verbindung stehen, die eine Zugangsöffnung von außen besitzt, wenigstens einen Dampf-Nebelerzeuger oder Rauchgenerator in einer Kammer und wenigstens einen variabel positionierbaren Miniaturlüfter zur Erzeugung von Druckdifferenzen und Luftströmungen in dem Gebäudemodell aufweist, wobei wenigstens eine seitliche oder die obere Abdeckplatte des Modells transparent ist und wenigstens ein Teil der Kammer über verschließbare Fenster verfügt.

Mit Hilfe eines derartigen Modells läßt sich die Rauchausbreitung in einem Gebäude unter verschiedenen Einflüssen, wie z. B. offenen Fenstern und Türen sowie von Belüftungs- oder Absaugmaßnahmen untersuchen. Die Türen und Fenster sowie die Anordnung des Miniaturlüfters können auch während der Simulation beeinflußt werden, beispielsweise um festzustellen, welche Vorgehensweise bei der Brandbekämpfung die sinnvollste ist. Die transparente Abdeckplatte erlaubt einen Einblick in das gesamte Gebäude aus verschiedenen Perspektiven, so daß das Gebäudemodell auch sehr gut für Schulungszwecke mit größeren Gruppen geeignet ist.

Mit Hilfe des erfindungsgemäßen Gebäudemodells kann beispielsweise demonstriert werden, daß es bei einem Brandherd in einem Raum eines Gebäudes (in der Kammer des Gebäudemodells) vorteilhaft ist, mit Hilfe eines Gebläses im Treppenhaus bzw. Flur (Zentralkammer) einen Überdruck zu erzeugen, statt die Luft daraus abzusaugen.

Das Gebäudemodell kann in einer ersten Variante als Flachbau mit einer einen Flur darstellenden Zentralkammer und um diese angeordnet liegende Kammern ausgebildet sein. Vorzugsweise ist dabei bei wenigstens einer Kammer in der oberen, transparenten Abdeckplatte eine Lüftungsklappe vorgesehen, um die insbesondere bei industriellen Flachbauten gegebenen Lüftungseigenschaften zu simulieren.

Zur Beobachtung der Rauchausbreitung in Hochhäusern kann die Zentralkammer modellhaft ein Treppenhaus darstellen, und die Kammern können auf mehreren Etagen angeordnet sein. Selbstverständlich sind auch Mischformen der zuvor genannten erfindungsgemäßen Alternativen möglich, bei denen auf jedem "Stockwerk" mehrere Kammern um die das Treppenhaus bildende Zentralkammer angeordnet sind.

Vorzugsweise sind im Bereich der Nebel- bzw. Dampferzeuger Wärmequellen, z. B. elektrische Heizeinrichtungen oder Teelichter angeordnet. Mit Hilfe der Wärmequellen kann die Rauchausbreitung mit noch größerer Realitätsnähe simuliert werden, da die aus dem Modellbau bekannten Nebel- und Dampferzeuger mit vergleichsweise niedrigen Temperaturen arbeiten, während in der Realität Rauch eine sehr hohe Temperatur aufweist und dadurch im Gegensatz zu kaltem Rauch nach oben steigt. Die Anordnung von Wärmequellen im Bereich der Nebel-, Rauch- oder Dampferzeuger erlaubt daher die Simulation aufsteigender Warmluftströmungen.

Falls dies gewünscht ist, können oberhalb der Wärmequelle Leitelemente zum gezielten Umlenken des Warmluftstromes vorgesehen sein.

Da Wärmequellen erzeugten Nebel oder Dampf zerstören können, ist als Alternative zu den Wärmequellen der Einsatz von Lüftern insbesondere im Bereich des Treppenhauses möglich, um die aufsteigenden Luftströme ohne Beeinträchtigung der Dampf- bzw. Nebelqualität simulieren zu können. Das Gebäudemodell kann ferner über Be- und Entlüftungseinrichtungen verfügen, welche die durch Klima- und Belüftungsanlagen in realen Gebäuden erzeugten Luftströme simuliert.

In vorteilhafter Weiterbildung der Erfindung ist vorgesehen, daß die Fenster und Türen von außen betätigbar sind. Mit Hilfe der beispielsweise als Gestänge ausgebildeten Betätigungsmechanismen lassen sich während der Raucherzeugung die räumlichen Gegebenheiten verändern, um beispielsweise einen Löschangriff der Feuerwehr, bei dem Türen geöffnet werden, zu simulieren. Im Sinne einer praxisnahen Schulung von Feuerwehrleuten ist es auch von Vorteil, wenn die Fenster aus einer leicht zerstörbaren Folie bestehen. In diesem Fall muß bei einem simulierten Einsatz genau überlegt werden, ob ein Fenster zerstört werden soll oder ob dies wegen der Entstehung ungünstiger Luftströmungen vermieden werden soll.

Ein Lüfter ist vorzugsweise an der Zugangsöffnung der Zentralkammer des Modells angeordnet. Er ist vorzugsweise wendbar und auf seiner Saugseite mit einem Absaugrohr versehen. Dadurch läßt sich sowohl das Absaugen der Luft aus der Zentralkammer als auch das Aufbauen eines Überdrucks in dieser bewerkstelligen. Selbstverständlich können weitere Lüfter in den Kammern oder der Zentralkammer angeordnet sein, um bei großen, komplexen Gebäudemodellen auch in von der Zugangsöffnung entfernten Bereichen praxisnahe Luftströmungen erzeugen zu können. Auch das Anordnen entgegengerichtet wirkender Lüfter nebeneinander zum Erzeugen von Umwälzströmungen ist denkbar.

Zur Erleichterung von Umgestaltungsmaßnahmen oder Reparaturen in den Kammern des Gebäudemodells ist vorzugsweise eine Seitenwand bzw. die transparente Abdeckplatte des Gebäudemodells abnehmbar, aufklappbar oder wegschiebbar.

Nachfolgend wird anhand der beigefügten Zeichnung näher auf Ausführungsbeispiele der Erfindung eingegangen. Es zeigen:
- Fig. 1: eine Ansicht eines Gebäudemodells mit übereinander angeordneten Kammern;
- Fig. 2: das Gebäudemodell nach Fig. 1 mit simulierter Rauchausbreitung;
- Fig. 3: eine Ansicht eines flachen Gebäudemodells mit nebeneinanderliegenden Kammern;
- Fig. 4: das Gebäudemodell nach Fig. 3 mit simulierter Rauchausbreitung.

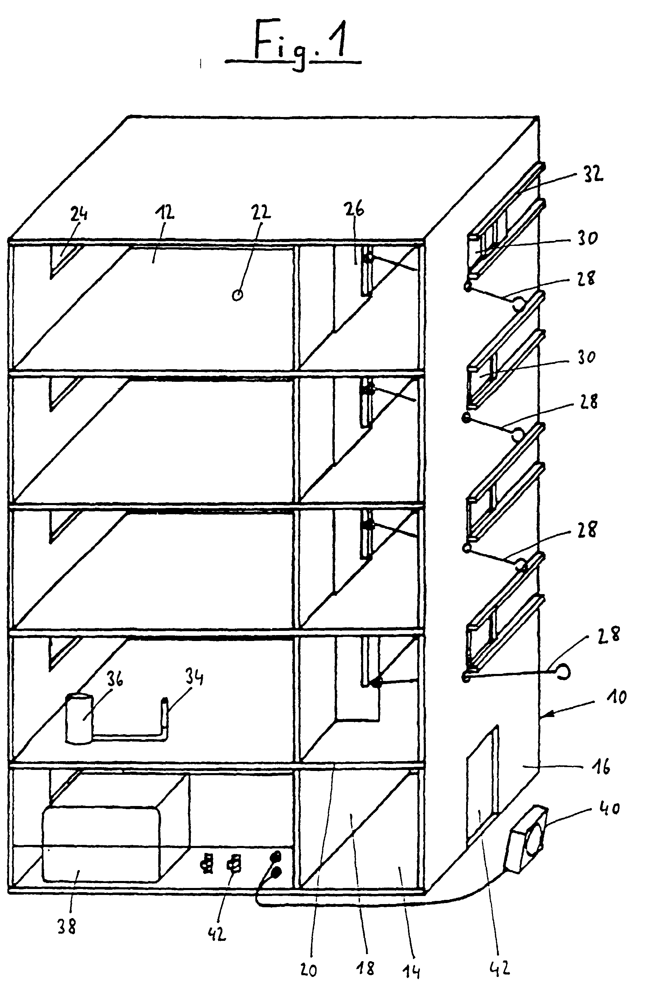

Fig. 1 zeigt ein Gebäudemodell 10, das mehrere übereinander angeordnete Stockwerke mit separaten Kammern 12 und eine Zentralkammer 14 aufweist, die sich über alle Stockwerke erstreckt und modellhaft das Treppenhaus eines Gebäudes darstellt. Die seitlichen Außenwände 16, Innenwände 18 und Decken 20 des Gebäudemodells 10 bestehen aus Holz oder Blechstanzteilen, während die vordere und hintere Stirnwand 22 aus Glas- oder Plexiglasplatten bestehen, um einen optimalen Einblick in das Innere des Gebäudemodells 10 zu erhalten. Wenigstens eine Stirnwand des Gebäudemodells 10 ist abnehmbar, wegklappbar oder seitlich wegschiebbar.

Die einzelnen Kammern 12 verfügen über verschließbare Fensteröffnungen 24 zur Außenseite hin sowie über betätigbare Türen 26 zur Zentralkammer 14 hin. Die Türen 26 besitzen jeweils eine Betätigungsstange 28, die aus dem Gebäudemodell 10 herausragt und damit ein Betätigen der Türen 26 bei geschlossener Abdeckplatte ermöglicht. In Fig. 1 ist die Tür 26 im ersten Stockwerk des Modells 10 geöffnet dargestellt. Auch die Zentralkammer 14 verfügt in jedem Stockwerk über betätigbare Fenster 30, die in Schiebeführungen 32 beweglich gelagert sind.

In der Kammer 12 des ersten Stockwerks ist ein Dampferzeuger 34 mit einem Vorratshälter 36 vorgesehen. Derartige Dampferzeuger sind beispielsweise aus dem Modellbau bekannt und werden elektrisch betrieben.

In der Kammer 12 des "Erdgeschosses" ist ein Transformator 38 vorgesehen, der an das übliche Haushaltsstromnetz anschließbar ist und die elektrischen Verbraucher in dem Gebäudemodell 10 versorgt. Neben dem Dampferzeuger 34 ist auch ein Miniaturlüfter 40 über einen Schalter 42 an den Transformator 38 angeschlossen. Mit Hilfe des Lüfters können Luftströmungen in dem Gebäudemodell 10 erzeugt werden oder Überdrücke in der Zentralkammer 14 oder in einzelnen Kammern 12 erzeugt werden. Der Lüfter 40 kann an verschiedenen Stellen des Gebäudes 10 angeordnet sein. Gemäß Fig. 1 ist er so angeordnet, daß er Luft durch eine Zugangsöffnung 42 zur Zentralkammer 14 blasen und dadurch einen Überdruck in der Zentralkammer 14 erzeugen kann.

Der Transformator 38 kann weitere elektrische Verbraucher in dem Gebäudemodell 10 speisen, z. B. Beleuchtungskörper, elektrische Heizvorrichtungen im Bereich der Dampferzeuger 34 oder Lichtschranken, die als Rauchmelder reagieren. Eine Heizeinrichtung im Bereich des Dampferzeugers 34 ermöglicht es, praxisnahe Warmluftströmungen zu erzeugen, die mit den bei niedrigen Temperaturen arbeitenden Dampferzeuger 34 aus dem Modellbau alleine nicht erzielbar sind.

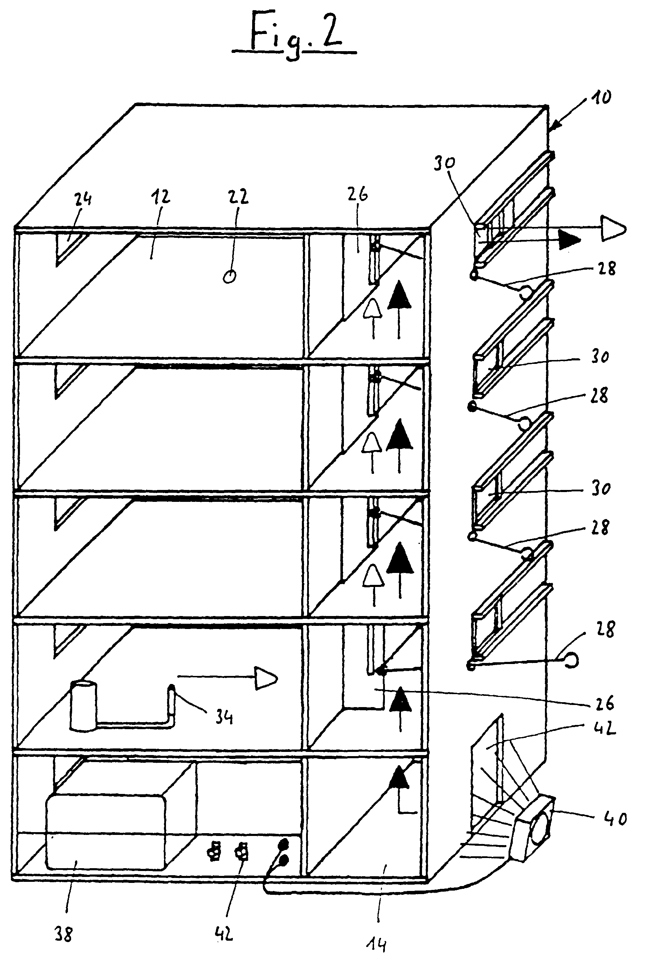

In Fig. 2 ist das Gebäudemodell 10 mit eingeschaltetem Dampferzeuger 34 und arbeitendem Lüfter 40 dargestellt. Der durch eine geeignete Heizvorrichtung (nicht gezeigt) erwärmte Dampf aus dem Dampferzeuger 34 steigt nach oben und gelangt durch die offene Verbindungstür zwischen der Kammer 12, in welcher der Dampferzeuger 34 angeordnet ist, in die Zentralkammer 14. Durch ein offenes Fenster 30 im obersten Stockwerk kann der Dampf entweichen. Der Lüfter 40 sorgt für eine Luftströmung in der Zentralkammer 14 von unten nach oben. Aus einem solchen Modellversuch läßt sich erkennen, daß bei einer derartigen Brandsituation in der Praxis ein Angriff der Feuerwehr durch das Treppenhaus erfolgen könnte, da durch die Luftströmung dieses im Ergeschoß und zum größten Teil auch im ersten Geschoß frei von Rauch ist.

Die Ölzufuhr zum Dampfgenerator 34 aus dem Behälter kann mit Hilfe der Schwerkraft, einer Pumpe mit dosierter Fördermenge oder dadurch erfolgen, daß der Dampfgenerator im Öl steht.

Selbstverständlich ist es ohne weiteres denkbar, auf einer Etage mehrere Kammern anzuordnen, die über separate Türen mit der Zentralkammer 14 in Verbindung stehen. Grundsätzlich sind zwar jegliche aus der Praxis bekannte Grundrißformen denkbar, es sollte allerdings beachtet werden, daß bei einem allzu komplexen Innenaufbau des Gebäudemodells 10 die Übersichtlichkeit leidet.

Die Türspalte der Innentüren 26 können verschieden weit ausgebildet sein, so daß man beispielsweise bei der Simulation eines Altbaubrandes weite Türspalte und bei der Simulation eines Brandes in einem modernen Hochhaus enge Türspalte vorsehen wird.

Zur Annäherung an die Praxis können die Kammern 12 auch mit porösen Materialien ausgekleidet sein, die während der Rauchentwicklung den Rauch absorbieren und ihn anschließend langsam wieder an die Umgebung abgeben.

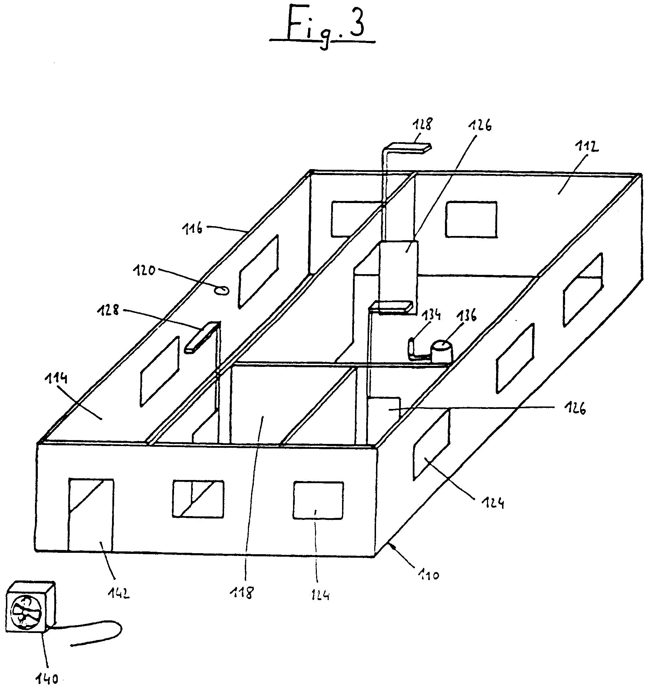

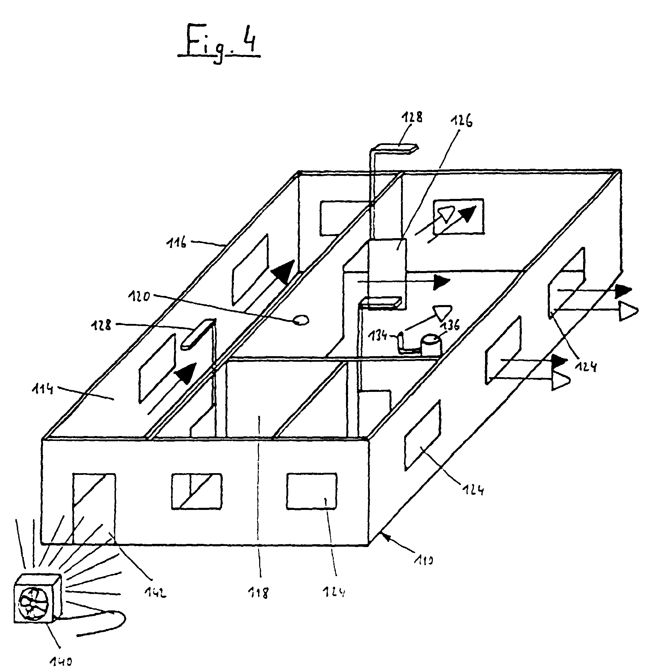

Während sich das senkrecht stehende Gebäudemodell gemäß Fig. 1 und 2 insbesondere auch für Schulungszwecke sehr gut eignet, weil es von beiden Seiten einsehbar ist und daher vielen Zuschauern gleichzeitig die Beobachtung ermöglicht, wird man zur Erforschung der Rauchausbreitung in Flachbauten ein Gebäudemodell ähnlich dem Gebäudemodell 110 gemäß Fig. 3 und 4 vorsehen. Das Gebäudemodell 110 weist mehrere Kammern 112, die die Räume eines Flachbaus darstellen, und eine Zentralkammer 114 auf, die einem Flur entspricht, von dem aus die Räume eines Gebäudes zugänglich sind. Die Aussenwände 116 und Innenwände 118 bestehen aus Sperrholz oder sonstigen geeigneten Materialien. Das Gebäudemodell ist mit einer transparenten Abdeckplatte 120 versehen, die einen Einblick in das Innenleben des Modells gestattet. Die Kammern 112, 114 verfügen über verschließbare Fensteröffnungen 124, und zwischen den Kammern sind wenigstens zum Teil Türen 126 vorgesehen, die über ein Drehgestänge 128 von außen schließbar sind.

In einer Kammer ist ein Dampferzeuger 134 mit einem Vorratsbehälter 136 vorgesehen. Die Stromversorgung des Gebäudemodelis 110 erfolgt in gleicher Weise wie bei dem in Fig. 1 und 2 dargestellten Gebäudemodell 10 durch einen Transformator (nicht gezeigt). Ein Lüfter 140 ist im Bereich der Zugangsöffnung 142 zu der Zentralkammer 114 angeordnet, mit Hilfe dessen je nach Ausrichtung ein Über- oder Unterdruck in der Zentralkammer 114 erzeugbar ist.

In Fig. 4 ist die Rauchausbreitung bei einer Simulation in dem Gebäudemodell 110 dargestellt. Hierbei steht die Verbindungstür 126 zwischen der Zentralkammer 114 und der Kammer 112, in welcher sich der Raucherzeuger 134 befindet, offen. Ein Fenster 124 dieser Kammer ist geöffnet.

Der Lüfter 140 erzeugt eine Luftströmung von der Zugangsöffnung 142 durch die offen stehende Tür 126 zum offenen Fenster 124. Auf diese Weise wäre es für die Feuerwehr ohne allzu große Gefahr durch den Rauch möglich, zum Brandherd zu gelangen.

In beiden beschriebenen Gebäudemodellen ist es denkbar, mehrere Lüfter simultan einzusetzen, beispielsweise um Luftströmungen zu verstärken oder Umwälzströmungen durch entgegengesetzt arbeitende, nebeneinanderliegende Lüfter zu simulieren.

## Patentansprüche

1. Gebäudemodell zur Simulation der Rauchausbreitung bei Bränden in Gebäuden mit mehreren Kammern (12, 14; 112, 114), die wenigstens zum Teil über schließbare Türen (26; 126) mit einer Zentralkammer (14; 114) in Verbindung stehen, die eine Zugangsöffnung (42; 142) von aussen besitzt, wenigstens einem Dampf-Nebelerzeuger (34; 134) oder Rauchgenerator in einer Kammer (12, 14; 112, 114) und wenigstens einem variabel positionierbaren Miniaturlüfter (40, 140) zur Erzeugung von Druckdifferenzen und/oder Luftströmungen in dem Gebäudemodell (10, 110), wobei wenigstens eine seitliche oder die obere Abdeckplatte (122) des Modells (10; 110) transparent ist und wenigstens ein Teil der Kammern (12, 14; 112, 114) über verschließbare Fenster (24, 30; 124) verfügt.

2. Gebäudemodell nach Anspruch 1, **dadurch gekennzeichnet**, daß es als Flachbau mit einer einen Flur darstellenden Zentralkammer (114) und um diese herum angeordneten Kammern (112) ausgebildet ist.

3. Gebäudemodell nach Anspruch 1, **dadurch gekennzeichnet**, daß die Zentralkammer (14) modellhaft ein Treppenhaus darstellt und die Kammern (12) auf mehreren Etagen angeordnet sind.

4. Gebäudemodell nach einem der vorhergehenden Ansprüche, **dadurch gekennzeichnet**, daß im Bereich der Nebel-, Rauch- oder Dampferzeuger (34, 134) Wärmequellen angeordnet sind.

5. Gebäudemodell nach Anspruch 4, **dadurch gekennzeichnet**, daß als Wärmequelle elektrische Heizeinrichtungen oder Teelichter Verwendung finden.

6. Gebäudemodell nach den Ansprüchen 4 oder 5, **dadurch gekennzeichnet**, daß oberhalb der Wärmequelle Leitelemente zum gezielten Umlenken des Warmluftstroms vorgesehen sind.

7. Gebäudemodell nach Anspruch 3, **dadurch gekennzeichnet**, daß wenigstens im Treppenhaus ein Lüfter zur Simulation einer aufsteigenden Strömung angeordnet ist.

8. Gebäudemodell nach einem der vorhergehenden Ansprüche, **dadurch gekennzeichnet**, daß die Fenster (30) und Türen (26; 126) von außen betätigbar sind und/oder wenigstens teilweise aus einer leicht zerstörbaren Folie bestehen.

9. Gebäudemodell nach einem der vorhergehenden Ansprüche, **dadurch gekennzeichnet**, daß ein Lüfter (40; 140) an der Zugangsöffnung (42;142) der Zentralkammer (14; 114) des Modells (10; 110) angeordnet ist.

10. Gebäudemodell nach Anspruch 9, **dadurch gekennzeichnet**, daß der Lüfter (40; 140) an der Zugangsöffnung (42; 142) wendbar und auf seiner Saugseite mit einem Absaugrohr versehen ist.
